# EUROPEAN PATENT APPLICATION

(11) **EP 1 291 631 A1**
(43) Date of publication of application: **12.03.2003**
(21) Application number: 02013127.2
(22) Date of filing: 14.06.2002
(51) Int. Cl.: G01L 1/20

(54) **A glass with functions of sensor for detecting fracture, stress and strain, and corresponding method of fabrication thereof**

(30) Priority: 10.07.2001 IT TO20010673
(71) Applicant: Universtià di Trento, Dipartimento di Ingegneria dei Materiali, 38100 Trento (IT)
(72) Inventor: Soraru', Gian Domenico, Università di Trento, Via Belenzani, 12, 38100 Trento (IT); Sglavo, Vincenzo Maria c/o Univeristà di Trento, Via Belenzani, 12 I-38100 Trento (IT); Dandrea, Denis c/o Università di Trento, Via Belenzani, 12 I-38100 Trento (IT)
(74) Representative: Marchitelli, Mauro

(57) **Abstract**

A glass with functions of sensor for detecting fracture, stress and strain (1), comprising:
- a supporting element (1A) made of a first material having a residual-stress profile which is able to produce stable growth of surface defects prior to its catastrophic failure, i.e., having a compression peak at a certain depth beneath its surface;
- a layer (1B) made of a second electrically conductive material, applied on at least one face of the supporting element (1A); and
- means for detecting the electrical resistance of the conductive layer (1B).

A mechanical stress exerted on the supporting element (1A) is able to determine the growth of said defects, with the consequent variation of the electrical resistance of the conductive layer (1B); the detection of said variation in electrical resistance enables the presence and/or amount of the mechanical stress to be inferred prior to possible catastrophic failure of the supporting element (1A).

## Description

The present invention relates to a glass with functions of sensor for detecting fracture, stress and strain, and corresponding method of fabrication thereof.

In the present state of the art there have been developed various methodologies aimed at providing a material with functions of sensor for detecting fracture, i.e., having the capacity to signal the incipient failure of the component made with said material.

In accordance with the above-mentioned methodology, the aim has, in particular, been to cause the mechanical phenomenon of crisis of the material to be able to produce a signal of an electrical type, in so far as such a signal is easier to monitor, especially if said mechanical phenomenon of crisis is located at a distance, in sites that are not visible or that are difficult to reach, or extends over long time intervals.

In such a framework, the following solutions have been proposed:
A) Embedding of conductive fibres in the material (on the subject see, for example: S.M. Toffoli, R.L. Lehman, "DETERMINATION OF INDIVIDUAL FIBER FAILURE IN FIBER BUNDLES", Journal of the American Ceramic Society, Vol. 84, No. 1, January 2001).

In accordance with the above solution, the failure of the conductive fibres generated by a crack that traverses said fibres, following upon yielding of the material is exploited, or else the yielding of the fibres within the material, caused by the transfer of the stresses from the material to the fibres, is exploited. The said failure or yielding determines an increase in the electrical resistance, in that it reduces the number of fibres that conduct.

In accordance with the solution referred to above, the conductive fibres must be introduced into the material during the initial steps of fabrication of the product. This involves the drawback that the fibres may modify the properties of the material and cannot be used on pieces that require machining operations after undergoing treatment of sintering or casting.

The point where the maximum stress allowed for the material is exceeded generally remains memorized in the product, in so far as the fibres cannot re-knit:
B) Arrangement of a strain gauge on the material (on the subject see, for example: M. Savino, "FONDAMENTI DELLA TEORIA DELLE MISURE" ? "FOUNDATIONS OF THE THEORY OF MEASUREMENTS", La Nuova Italia Scientifica, Rome, p. 438, 1992).

Strain gauges are elements that increase their electrical resistance proportionally to the impressed strain. In this case, the phenomenon is reversible, and hence the material does not "memorize" the maximum load reached, which must consequently be recorded externally. The measurement allowed by this technique is moreover one of strain and not of stress, and so conversion calculations are required to be applied to the point in which the strain gauges are arranged.

The technique referred to proves in general to be very costly, since a large number of strain gauges are required to make each sensor, as well as very precise measuring apparatus. In addition, strain gauges are subject to thermal and chemical degradation if they are used in environments that are even not particularly hostile (such as, for instance, the temperature oscillations existing between night and day) or over long periods of time. For these reasons, the solution in question is prevalently adopted in the laboratory for studying the pattern of real stresses in the deformation of specimens:
C) Production of polymeric-matrix composites sensitive to stresses (on the subject see, for example: S. Hirano, A. Kishimoto, M. Miyayama, "CONDUCTIVE COATING ON STRUCTURAL CERAMICS FOR STRAIN DETECTION UTILIZING ELECTRICAL MEASUREMENTS", Journal of European Ceramic Society, No. 19, p. 2087, 1999).

According to this solution, a coating formed by a polymeric-matrix conductive composite is produced on the surface of the product, the electrical resistance of said conductive composite increasing with the load to which it is subjected. Currently, two different types of the above-mentioned technical solution are known, namely:
C1) CFGFRP (Carbon-Fibre-Glass-Fibre-Reinforced Plastic) (on the subject see, for example: N. Muto, H. Yanagida, M. Miyayama, T. Nakatsuji, M. Sugita, Y. Ohtsuka, "FORESEEING OF FRACTURE IN CFGFRP COMPOSITES BY THE MEASUREMENT OF RESIDUAL CHANGE IN ELECTRICAL RESISTANCE", Journal of the Ceramic Society of Japan, No. 100, vol. 4, p. 585, 1992).

In this case, graphite fibres are used, in a manner similar to what is described in point A) above. The graphite fibres are embedded in an epoxy matrix reinforced with fibre glass. Operation is similar to what is described with reference to point A), with the difference that the stress recorded is that of the composite coating and not that of the material or substrate.
C2) Conductive particles such as SnO₂(Sb)-coated TiO₂ (on the subject see the already cited: S. Hirano, A. Kishimoto, M. Miyayama, "CONDUCTIVE COATING ON STRUCTURAL CERAMICS FOR STRAIN DETECTION UTILIZING ELECTRICAL MEASUREMENTS", Journal of European Ceramic Society, No. 19, p. 2087, 1999) or SiC whiskers (on the subject see, for example: H. Yanagida, "INTELLIGENT CERAMICS", Ferroelectrics, No. 102, p. 251, 1990).

In this case, the deformation of the composite moves the conductive particles away from one another, reducing the points of contact and consequently increasing the electrical resistance of the composite. The process is not reversible because in general the particles are not able to return to their initial positions, also on account of the irreversible deformations generated in the matrix.

In the above two types of sensor it is in general difficult to measure or record the pattern of the electrical resistance during the loading step, and consequently, these sensors are normally used for analysing the maximum strain undergone. As for the solution referred to in point B) above, the strain is thus measured and not the stress in the substrate, which is derived mathematically.

In general, solutions C1 and C2 have a limited use in the laboratory for measuring the pattern of the real stresses on the surface of a specimen subjected to a known load, by measuring the residual electrical resistance of the composite. The typical poor resistance to wear of the coating, the problems of creep of the matrix, and the variability of the properties with exposure to ultraviolet radiation and solvents limit their practical use in the structural sphere:
D) Modification of the conductivity of the surface of the component (on the subject see, for example: N. Sadotani, S. Hirano, A. Kishimoto, "*IN SITU* MONITORING OF INDENTATION FRACTURE IN SEMICONDUCTOR TITANIA CERAMICS UTILIZING ELECTRIC CONDUCTION", Journal of Materials Science Letters, No. 19, p. 221, 2000).

The modification of the conductivity of the surface of a component can be obtained by diffusion of appropriate ions capable of rendering the material in question semiconductive by doping.

The solution has so far been applied to TiO₂ by insertion of Nb⁵⁺ by thermal diffusion from a layer of Nb₂O₅ at 1400°C for 3 hours. This method produces quite good results for measurements of growth of individual, well-defined microcracks or microflaws of the material, such as the ones produced by indentation.

The system is, however, far from applicable in the structural field, also on account of the high temperatures entailed in the production process.

It should, moreover, be emphasized how the various solutions referred to above modify the properties of the substrate or basic material of the sensor, and, in particular, the transparency ? if this is present in the starting material ?, as well as the modulus of elasticity.

The corresponding production processes must moreover be carried out only prior to (solutions A and D) or only following upon (solutions B and C) any possible thermal or mechanical treatments carried out on the component.

If the methodology referred to in point A is excluded, the other techniques are difficult to apply in real structures.

The application of the above-mentioned techniques to glass, even when technologically possible, moreover determines a drastic variation in the properties, in particular, the optical ones (in the first place, transparency, which is a peculiar characteristic of glass).

The purpose of the present invention is to solve one or more of the aforesaid problems.

In the above general framework, a first purpose of the present invention is to provide a sensor for detecting fracture, stress starting from brittle material which will ensure reliable operation, as well as being easy and inexpensive to produce industrially, and which will in particular be usable on a wide scale in the structural field, both for residential purposes and for industrial and commercial purposes.

A further purpose of the present invention is to provide a glass having functions of sensor for detecting fracture, stress and strain, i.e., capable of indicating that a limit load has been exceeded prior to arriving at failure, without, however, the transparency of the glass itself being adversely affected.

Yet another purpose of the present invention is to provide a glass having functions of sensor for detecting fracture, stress and strain, and capable of producing different levels of signal, both of an electrical nature and of a visual nature.

These and yet further purposes, which will emerge clearly from what follows, are achieved, according to the present invention, by a glass having functions of sensor for detecting fracture, stress and strain, and by a corresponding method of fabrication having the characteristics specified in the attached claims, which are understood as forming an integral part of the present description.

Further purposes, characteristics and advantages of the present invention will emerge clearly from the ensuing description and from the attached drawings, which are provided purely by way of explanatory and non-limiting example, and in which:
- Figure 1 is a schematic representation of a configuration for testing a glass with functions of sensor for detecting fracture, stress and strain, built in accordance with the present invention;
- Figure 2 is a graph indicating the pattern of the electrical resistance of a sensor built in accordance with the present invention as a function of a first stress applied thereto;
- Figure 3 is a graph indicating the pattern of the electrical resistance of a sensor built in accordance with the present invention as a function of a second stress applied thereto;
- Figure 4 is a graph indicating the fatigue curve of a sensor built in accordance with the present invention as a function of a first load applied thereto; and
- Figure 5 is a graph indicating the fatigue curve of a sensor built in accordance with the present invention as a function of a second load applied thereto.

The idea underlying the present invention, for the purposes of making a glass with functions of detecting fracture, stress and strain, is to utilize, as starting material, a silicate-based glass, i.e., a material presenting common characteristics in terms of chemical inertia, ease of treatment, relative hardness and transparency.

It is moreover known that silicate-based glasses are characterized by a considerable mechanical weakness and intrinsic brittleness. In this connection, it is to be recalled that the surface is usually considered the weak point from the mechanical point of view of bodies made of glass, the failure of which usually occurs starting from imperfections or surface defects generated during production, handling or use.

For the above reason, according to the present invention, the silicate-based starting glass is transformed into an engineered-stress-profile (ESP) glass, i.e., a common glass that has, however, peculiar mechanical characteristics.

In short, in order to make an ESP glass (the resistance of which is always higher than that of a traditional silicate-based glass), a double-ion-exchange process is employed, i.e., a two-stage chemical-hardening process.

In accordance with the above process, in addition to the customary bath of potassium salts, which brings about a deep compression of the surface, the basic glass undergoes a second treatment in a solution of potassium nitrate and sodium nitrate. The ESP glass that is obtained is defined by persons skilled in the field as "intelligent" since it is able to indicate when it is about to break by revealing visible flaws or cracks, which propagate over the surface of the material and increase steadily as the stress increases.

In other words, therefore, an ESP glass has a residual-stress profile suitable for producing steady growth of surface defects prior to its catastrophic failure, i.e., it is characterized by a compression peak at a certain depth below the surface.

Another aspect that should be emphasized is that ESP glass breaks by crumbling, i.e., it breaks into fragments of less than one millimetre in size, unlike traditional glass, which breaks forming dangerous splinters.

For a more detailed description of some possible modes of embodiment of an ESP glass, the reader is referred to WO-A-00/47529, the teachings of which in this regard are incorporated into the present patent for reference.

According to the invention, in order to produce a glass with functions of detecting fracture, stress and strain, the ESP glass is coated on at least one of its faces with a thin layer or film, preferably a transparent one, of electrically conductive material. In this way, when the ESP glass is subjected to tensile or flexural stress, at the point of steady growth of the typical surface flaws or cracks there is observed an increase in the electrical resistance of the conductive film on account of the partial interruption of the electrical circuit.

By monitoring the electrical resistance of the conductive film present on the surface of the ESP glass, it thus becomes possible to record the formation of the surface microcracks or microflaws which precede failure of the glass, even without them being directly observed visually.

The solution that forms the subject of the present invention may be applied to any glass that can be transformed into ESP glass, for instance, according to the modalities described in the patent WO-A-00/47529 referred to above.

For the above purpose, as has been said, it is thus possible to use any silicate-based glass in which, through a process of chemical hardening, a residual-stress profile can be generated with a clearly pronounced compression peak at a given depth beneath the surface.

There do not exist limitations to the possible embodiments, and hence, for the purposes of their implementation, the sensors according to the invention can be either products derived from plane glass or products derived from hollow glass.

The conductive film may consist of a material that possesses appropriate physico-mechanical characteristics such that:
i. the cracks that form on the surface of the ESP glass during mechanical loading propagate to the film itself;
ii. the film does not crack before the substrate, i.e., before the ESP glass; and
iii. the film does not undergo elastic or plastic deformation without fissuring or cleaving in points corresponding to the cracks arising in the substrate, i.e., the ESP glass.

The physico-mechanical characteristics of the materials that can be used as films must, therefore, preferably be contained within the following ranges:
- elastic modulus: approx. 50-150 GPa; and
- extensibility: approx. 0.1%-1%.

A further preferred characteristic of the film of coating of the ESP glass is that of transparency in the visible-light range.

It is to be noted, however, that if transparency were not to be required (for example, on account of the opacity of the substrate or ESP glass used), also the coating film might not necessarily be transparent. It should moreover be emphasized that the conductive film could also fulfil other functions, such as that of reflecting layer, anti-reflecting layer, insulating layer, colouring layer, etc. Consequently, in these cases, the film could be transparent but not necessarily colourless.

The coating film should preferably have a sufficiently high conductivity in order to enable measurement of the variations in its electrical resistance using a simple apparatus, for example, a battery-supplied one. The measuring circuit must preferably be sized in such a way as to reduce current consumption as much as possible, above all when the ESP glass is not indicating an overload.

For the above purpose, an ordinary multimeter or a measuring circuit made up of a Wheatstone bridge, in which the sensor according to the invention is one of the resistors, may, for example, be used.

Another preferred characteristic of the conductive film must finally be its good surface adhesion to the ESP glass.

According to the invention, the conductive film is deposited on the surface of the ESP glass, employing a technology that preferably does not require process temperatures higher than 400°C, in order not to limit the applicability of the invention.

For this purpose, any one of the PVD (Physical Vapour Deposition), CVD (Chemical Vapour Deposition), Sputtering or Sol-Gel technologies may, for instance, be used.

In what follows, there is provided a practical example of embodiment of a sensor for detecting fracture, stress and strain according to the invention.

For the purposes of the above example, there has been used, as basic material, a plate of plane ESP aluminosilicate glass with a SnO₂ coating deposited by sputtering (see, for example, K. Wasa, S. Hayakawa, 'HANDBOOK OF SPUTTER DEPOSITION TECHNOLOGY", Noyes Publications, Park Ridge, New Jersey, 1992).

Sputtering is, basically, a technique in which the material to be deposited (the target material) is vaporized by bombardment with argon ions accelerated by a potential difference. The atoms of the material to be deposited are expelled by sputtering and deposit on the substrate, which is set in front of the target. The electric field may be a d.c. one, for conductive targets, or a radio-frequency a.c. one, for semiconductor or insulating targets. Frequently, the flow of argon ions is entrapped in an appropriate magnetic field, which increases their efficiency. This latter technique is referred to as magnetron sputtering.

The chemical composition of the starting glass is given in Table 1 below. The temperature of vitreous transition (Tg) of the glass is 630°C.

**TABLE 1**

| S | N | C | M | K | A | T | O |
|---|---|---|---|---|---|---|---|
| iO₂ | aO₂ | aO | gO | ₂O | l₂O₃ | iO₃ | ther |
| 6 | 1 | 0 | 3 | 3 | 1 | 0 | 0 |
| 2.3 | 2.8 | .3 | .3 | .5 | 6.4 | .8 | .6 |

For the above purpose, glass bars having a nominal thickness of 2 mm and dimensions of 60 mm x 10 mm were used.

The sides and edges of the aforesaid bars were polished with silicon-carbide paper having a grain size of 1000 grit.

The bars thus obtained then underwent an annealing process in order to remove any residual stresses due to the process of production or polishing. The treatment used consisted of a heat cycle structured as follows:
- heating rate: 180°C/h;
- stay time at 580°C: 8 h;
- cooling rate: 40°C/h.

The glass specimens, prepared according to the procedure described above, were then subjected to a treatment of chemical hardening using an appropriate oven (Model: LEMA TC 20 A).

The treatment consisted in dipping the glass bars, previously cleaned and degreased with acetone, in a bath of fused salts. This operation was carried out using a rack, in which the bars were kept at a distance of 7 mm apart, so as to obtain a uniform process of diffusion. To prevent any thermal shock, the bars underwent a pre-heating and a post-cooling in an appropriate chamber of the oven for approximately 25 minutes. Once the hardening cycle was completed, the specimens were washed carefully under running water.

In particular, as regards the choice of the chemical-hardening process, a double-hardening process was adopted, of the type referred to in WO-A-00/47529, structured as follows:
- hardening in a bath of pure KNO₃ at 500°C for 24 h;
- washing under running water;
- hardening in a solution of KNO₃, containing a molar fraction of NaNO₃ equal to 30%, at a temperature of 400°C for 30 min.

Following upon the double-hardening process, the specimens, carefully washed with water and acetone, were coated on a single face with the conductive film using the sputtering technique. For this purpose, magnetron sputtering was adopted, with the target at the bottom and the substrate at the top. The following process parameters were adopted:
- Gas: 95% Ar ? 5% O₂
- Pressure: 5 * 10^{?3} mbar
- Power used: 40 W
- Distance between target and substrate:13 cm
- Deposition time: 2 h

The targets were obtained by sintering disks of pure SnO₂ powder. The disks, which had an initial diameter of 51.7 mm and a thickness of 6.25 mm, underwent compacting by compression in a press at 10 MPa and were then sinterized at 1200°C.

The thickness of the conductive films measured after sputtering was 0.29 ± 0.01 mm, homogeneous on all the specimens; the specimens proved in any case to be transparent in the visible spectrum. From measurements made with nanodurometers, a modulus of elasticity of the film of 104 ± 8 GPa was found.

The conductive film was found to present a very variable electrical resistance, ranging between 0.5 and 20 Mohm.

It should be noted that the contact resistance depends upon how good the contact is and can be improved with the deposition of gold contacts. For this purpose, gold contacts having an area of approximately 1 cm² were deposited at the ends of the specimens of glass with functions of sensor for detecting fracture, stress and strain. The contact resistance was thus reduced to between 0.1 Mohm and 1 Mohm.

The specimens produced in the way described above were subjected to 4-point bending tests using a universal machine for mechanical testing. Five specimens were tested in each bending test.

The distances between the supports were chosen as 40 mm (bottom supports) and 20 mm (top supports), whilst the rate of displacement of the actuator was varied according to the test, in order to highlight the behaviour of the glass with the various types of loading. The bars were tested in such a way that the conductive film would represent the surface subjected to tensile force.

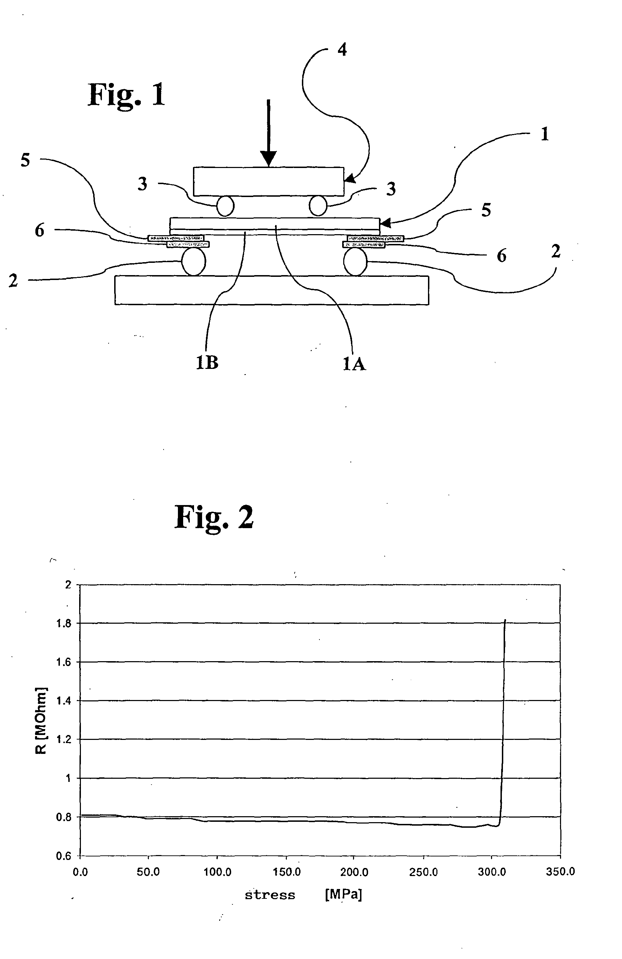

Figure 1 is a schematic representation of the test configuration. In the figure, the reference number 1 designates as a whole one of the specimens being examined, including the bar 1A made of ESP glass and the corresponding conductive film 1B made of SnO₂.

The reference number 2 designates the supports which were set 40 mm apart, and 3 designates the supports which were set 20 mm apart. The reference number 4 designates as a whole the test actuator, whilst 5 designates the aluminium contacts used for detecting the electrical resistance, and 6 designates the corresponding insulators with respect to the supports 2.

The data regarding the pattern of the force applied by the actuator 4 varying with time were saved in an ASCII file for subsequent processing and comparisons with the simultaneous measurements of resistance made on the contacts 5.

At this point, the curves of the electrical resistance R were obtained as a function of the stress s for the various specimens, where R is the electrical resistance of the film 1B and s is the maximum stress calculated from the loading data for the particular specimen 1 at a given instant.

The specimens were, in particular, tested mechanically in order to highlight the load at which there occurred formation of flaws or cracks at the surface.

The above surface cracks formed at loads lower than 430 MPa, but upon unloading, they closed almost perfectly and were thus no longer visible. This was revealed by photographing the specimens under stress.

Only if the specimen was subjected to high loads, i.e., ones higher than 430 MPa, did disorderly closing of the cracks cause the faces of the latter to fail to knit together perfectly after unloading, and hence to be observable to the naked eye.

The specimens were tested at two different rates of displacement of the actuator 4 to bring out the kinetics of the phenomena of fatigue at the crack tip. The first rate of displacement ("high") was 1 mm/min, and the second rate of displacement ("low") was 0.25 mm/min.

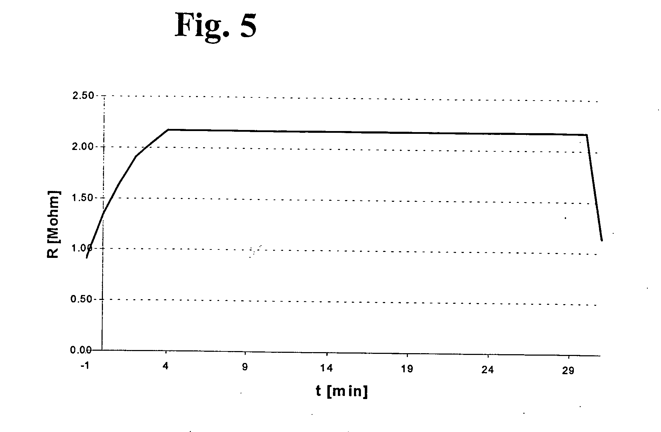

The graph appearing in Figure 2 visualizes a curve of resistance R versus stress s for a specimen 1 tested at a "high" rate of displacement of the actuator 4, i.e., at 1 mm/min. To be noted is the rapid and clear increment of R at a load of 320 MPa. Considering that cracks had been noted under stress on similar specimens already at 290 MPa, (see Figure 5) and that the film 1B did not break even at high loads, it is possible to put this effect down to the growth of surface cracks.

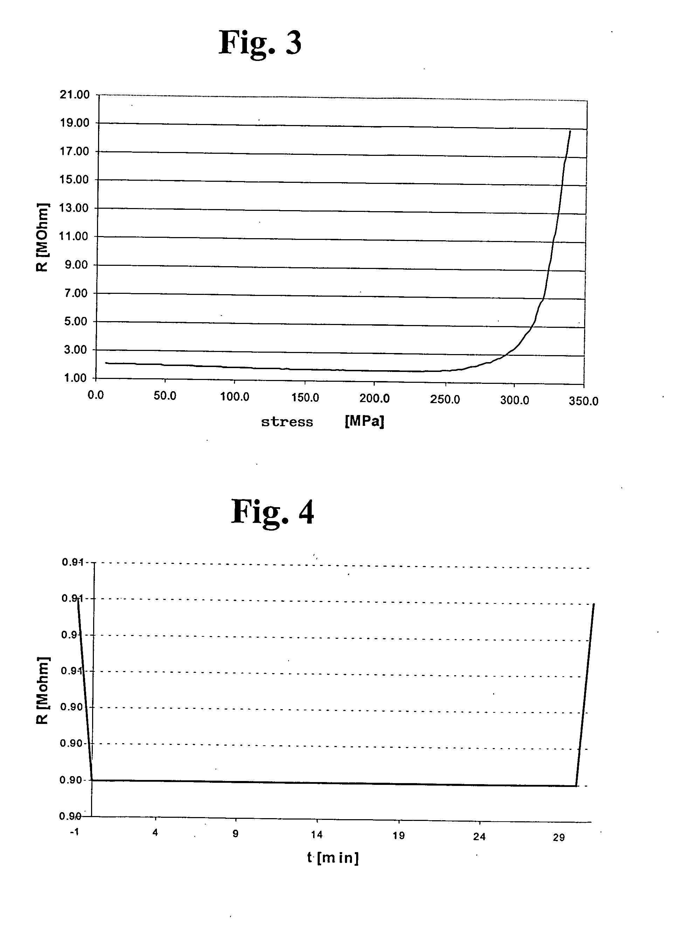

The graph appearing in Figure 3 shows, instead, the curve for a specimen 1 tested at a "low" rate of displacement of the actuator 4, i.e., at 0.25 mm/min. There may be noted an increment in the resistance R that is less sharp, owing to the fact that for loads of between 260 MPa and 300 MPa, the cracks grow on the surface by fatigue and require a certain time to traverse the specimen 1.

Growth by fatigue was studied by loading the specimen rapidly up to a pre-set load and maintaining the said load for 30 minutes, during which time the electrical resistance was measured.

The graphs appearing in Figures 4 and 5 give the data gathered for loads of 250 MPa and 290 MPa.

It may be noted how the growth by fatigue at these loads does not regard all the defects on the specimen, but only the ones close to criticality; the resistance does not increase indefinitely but remains limited to a maximum value, which is reached in an interval of time not exceeding 5 to 8 minutes according to the load. It is thus demonstrated that there is no formation of new cracks, but rather propagation of the ones that arose during loading.

This phenomenon can, if need be, enable utilization of the sensor to "memorize" the history of loading to which it is subjected. It is likewise noted that below 250 MPa there is no propagation of the cracks even for long time intervals or for slow loadings (note that in Figures 4 and 5 the instants t = ?1 and t = 31 represent the zero-loading conditions before and after the test). More precise measurements have brought this limit to 260 MPa, which is thus the lower limit at which there is a response from the sensor.

The mechanical measurements performed on the various specimens yielded a positive result and enabled the threshold values to be obtained at the different rates of displacement. These values are given below:
320 ± 10 MPa for a rate of displacement of 1 mm/min;
270 ± 10 MPa for a rate of displacement of 0.25 mm/min;
260 MPa, lower threshold value also for a very slow loading;
330 MPa, upper threshold value also for very fast loadings.

By integrating the data obtained from the test on the film 1B made of SnO₂ with those for the substrate 1A made of ESP glass, it is possible to define the threshold values for three levels of signal:
- electrical, for failure of the conductive film (Level 1);
- visual, for formation of cracks visible to the naked eye also after unloading (Level 2);
- visual, for complete failure of the glass due to the maximum sustainable stress being exceeded (Level 3).

Table 2 below gives, for each level, the reference values that can be ensured for each loading situation.

It may be noted that the values appearing in the table are at a fair distance apart and quite distributed, so enabling a very reliable use of the stress sensor according to the invention in safety devices.

**TABLE 2**

| Level | Minimum Value (MPa) | Maximum Value (MPa) |
|---|---|---|
| 1 | 260 | 360 |
| 2 | 410 | 440 |
| 3 | 520 | 540 |

It is in any case evident that the functions of sensor for detecting fracture, stress and strain obtained by means of the conductive film increases the safety of use of the glass according to the invention, since it enables exceeding of the threshold load to be signalled long before failure.

From what is described above, it is likewise clear how the sensor for detecting fracture, stress and strain provided according to the invention enables the purposes set to be fully achieved in a simple, inexpensive and reliable way.

The sensors for detecting fracture, stress and strain provided according to the invention can find extensive application both in the residential sphere and in the industrial or commercial spheres. The glass according to the invention, which has functions of sensor for detecting fracture, stress and strain may have structural uses, such as for large window panes, transparent beams, safety glasses for exhibitions, museums, shows, etc., or else may be used as a safety sensor, for instance in machinery or for remote determination of the maximum working stresses of structures that are far from readily accessible (for example, for controlling openings of cracks in buildings or overloading on structures of various nature).

From the foregoing description, the advantages and characteristics of the sensor for detecting fracture, stress and strain and the corresponding method of fabrication according to the present invention are therefore clear, the said characteristics being specified in greater detail in the attached claims.

Of course, without prejudice to the principle of the invention, the details of construction and the embodiments may vary widely with respect to what is described and illustrated herein, without thereby departing from the scope of the present invention, as defined by the attached claims.

According to a possible variant, the deposition of the layer or film may be carried out in the presence of an appropriate mask in order to obtain a grid-like coating or a coating made up of thin strips, which could enable not only capturing of the development of cracks, but also the position thereof on the surface of the ESP glass plate.

According to another possible variant, provided on the ESP glass substrate may be a multilayer coating, a layer also being provided to bestow on the ESP glass the function of stress and strain sensor, as previously described in accordance with the invention, and at least one other layer being provided to bestow on the ESP glass other functions, such as colour, anti-reflectance, insulation, etc.

## Claims

1. A glass with functions of sensor for detecting fracture, stress and strain (1), comprising:
- a supporting element (1A) made of a first material having a residual-stress profile which is able to produce the onset and/or stable growth of surface defects prior to its catastrophic failure, i.e., having a compression peak at a certain depth beneath its surface;
- a layer (1B) made of a second electrically conductive material, applied on at least one face of said supporting element (1A); and
- means for detecting the electrical resistance of said conductive layer (1B),
where a possible mechanical stress exerted on said supporting element (1A) is able to determine the onset and/or growth of said defects, with the consequent variation of the electrical resistance of said conductive layer (1B), the detection of said variation in electrical resistance enabling the presence and/or amount of the mechanical stress to be inferred prior to possible catastrophic failure of said supporting element (1A).

2. The glass according to Claim 1, **characterized in that** said first material is glass of the ESP type.

3. The glass according to Claim 2, **characterized in that** said glass of the ESP type is obtained starting from silicate-based glass.

4. The glass according to Claim 1, **characterized in that** said first material is obtained with one or more techniques referred to in the claims of WO-A-00/4729.

5. The glass according to Claim 1, **characterized in that** said layer is in the form of a film (1B).

6. The glass according to Claim 1 or Claim 5,
**characterized in that** said layer or film (1B) has a modulus of elasticity of approximately 50-150 GPa.

7. The glass according to Claim 1 or Claim 5, **characterized in that** said layer or film (1B) has a degree of extensibility of approximately 0.1%-1%.

8. The glass according to at least one of the preceding claims, **characterized in that** said layer or film (1B) is transparent in the visible-light range.

9. The glass according to at least one of the preceding claims, **characterized in that** said layer or film (1B) is made at least in part of SnO₂.

10. The glass according to at least one of the preceding claims, **characterized in that** to said layer or film (1B) there are associated electrical contacts for electrical connection to said means for detecting electrical resistance, said contacts being in particular made of gold.

11. The glass according to at least one of the preceding claims, **characterized in that** said means for detecting electrical resistance comprise a multimeter or a measuring circuit comprising a Wheatstone bridge, of which the sensor (1) forms a resistor.

12. The glass according to at least one of the preceding claims, **characterized in that** it is able to generate at least one first signal of a visual type by means of the formation of defects that are visible to the unaided eye.

13. The glass according to the preceding claim, **characterized in that** it is able to generate at least one second signal of a visual type by means of the complete failure of said supporting element (1A), reached on account of the maximum sustainable stress being exceeded.

14. The glass according to at least one of the preceding claims, **characterized in that** said layer or film (1B) fulfils also functions other than those of providing an electrical signal, such as reflecting, anti-reflecting and/or insulating functions.

15. The glass according to at least one of the preceding claims, **characterized in that** said layer or film (1B) is in the form of a grid or strips.

16. The glass according to at least one of the preceding claims, **characterized in that** said layer or film (1B) is covered with a coating, aimed at bestowing on said second material further characteristics, such as colour, anti-reflectance and insulation.

17. A method for making a glass with functions of sensor for detecting fracture, stress and strain according to one or more of the preceding claims, where:
i) said supporting element (1A) is made starting from silicate-based glass subjected to a two-stage chemical-hardening process, i.e. a double-ion-exchange process;
ii) said layer (1B) is deposited on said supporting element using PVD technology, or CVD technology, or sputtering technology, or sol-gel technology.

18. The method according to Claim 17, **characterized in that** said two-stage chemical-hardening process comprises:
- a first dipping of said silicate-based glass in a bath of potassium salts; and
- a second dipping of said silicate-based glass in a solution comprising potassium nitrate and sodium nitrate.

19. The method according to Claim 18, **characterized in that** said first dipping is carried out at a temperature of approximately 500°C for a time interval of approximately 24 h.

20. The method according to Claim 18, **characterized in that** said second dipping is carried out at a temperature of approximately 400°C for a time interval of approximately 30 min.

21. The method according to at least one of the preceding claims, **characterized in that** between said first dipping and said second dipping there is envisaged washing of the glass in water.

22. The method according to Claim 16, **characterized in that** said layer (1B) comprises SnO₂ deposited by magnetron sputtering.

23. The method according to at least one of the preceding claims, **characterized in that** said layer (1B) is deposited on said supporting element (1A) at a process temperature lower than 1200°C, and in particular not higher than 400°C.

24. The method according to Claim 16, **characterized in that**, prior to said process of chemical hardening, said glass is subjected to an annealing process, said annealing process comprising, in particular, a thermal cycle of the glass structured as follows:
- heating rate: approximately 180°C/h;
- stay time at 580°C: approximately 8 h;
- cooling rate: approximately 40°C/h.
The foregoing substantially as described and illustrated and for the purposes specified above.
